(19) Europäisches Patentamt / European Patent Office / Office européen des brevets

(11) **EP 2 186 271 B1**

(12) **FASCICULE DE BREVET EUROPEEN**

(45) Date de publication et mention
de la délivrance du brevet:
**20.02.2013 Bulletin 2013/08**

(21) Numéro de dépôt: **08803593.6**

(22) Date de dépôt: **03.09.2008**

(51) Int Cl.:
***H04L 12/66*** *(2006.01)*

(86) Numéro de dépôt international:
**PCT/EP2008/061622**

(87) Numéro de publication internationale:
**WO 2009/030706 (12.03.2009 Gazette 2009/11)**

(54) **DISPOSITIF DE COMMUTATION DE TRAMES**

VORRICHTUNG ZUR DATENPAKETVERMITTLUNG

FRAME SWITCHING DEVICE

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **03.09.2007 FR 0757312**

(43) Date de publication de la demande:
**19.05.2010 Bulletin 2010/20**

(60) Demande divisionnaire:
**11150727.3 / 2 309 682**

(73) Titulaire: **AIRBUS OPERATIONS
31060 Toulouse (FR)**

(72) Inventeur: **MONNIER, Stéphane
F-92100 Boulogne Billancourt (FR)**

(74) Mandataire: **Ilgart, Jean-Christophe et al
BREVALEX
95 rue d'Amsterdam
75378 Paris Cedex 8 (FR)**

(56) Documents cités:
**EP-A- 1 309 130     EP-A- 1 583 289**

- **JEROME GRIEU: "Analyse et évaluation de
techniques de commutation Ethernet pour
l'interconnexion des systèmes
avioniques"[Online] 24 septembre 2004
(2004-09-24), XP002484726 Extrait de l'Internet:
URL:http://ethesis.inp-toulouse.fr/archive
/00000084/01/grieu.pdf> [extrait le 2008-06-16]**
- **ARINC: "AFDX / ARINC 664 Tutorial (1500-049)"
INTERNET CITATION, [Online] 1 mai 2005
(2005-05-01), XP002429136 Extrait de l'Internet:
URL:http://www.acalmicrosystems.co.uk/whit
epapers/sbs8.pdf?PHPSESSID=bd03
0f1b97f284d41ec00cf1ea2d5226> [extrait le
2007-04-12] cité dans la demande**
- **SEIFERT RICH ED - SEIFERT R: "The Switch
Book: The complete guide to LAN Switching
Technology, passage" THE SWITCH BOOK : THE
COMPLETE GUIDE TO LAN SWITCHING
TECHNOLOGY, NEW YORK : JOHN WILEY &
SONS, US, 1 janvier 2000 (2000-01-01), pages
539-541, XP002429138 ISBN: 978-0-471-34586-2**

**Description**

**DOMAINE TECHNIQUE**

La présente invention concerne le domaine des réseaux embarqués et plus particulièrement un dispositif de commutation de trames pour connecter une pluralité d'équipements embarqués entre eux et/ou à un réseau AFDX (*Avionics Full Duplex Switched Ethernet*) .

**ÉTAT DE LA TECHNIQUE ANTÉRIEURE**

La sécurité est une préoccupation majeure dans la conception d'un aéronef. En particulier, il est indispensable d'assurer l'intégrité de certains types de données de mesure, considérées comme critiques pour le pilotage de l'avion. Parmi ces données on peut citer celles relatives au positionnement de l'avion ou encore celles donnant la quantité restante de carburant. Ces données sont généralement transmises par des capteurs à un ou des calculateur(s), au moyen d'un réseau embarqué. Réciproquement, un calculateur peut transmettre une commande de vol à des actuateurs, via un tel réseau.

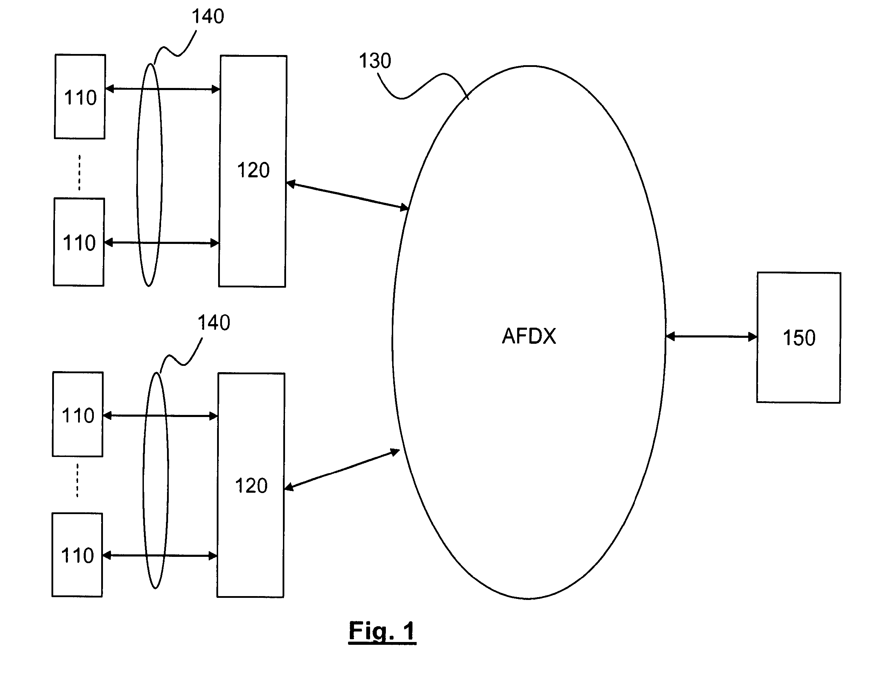

La Fig. 1 représente une architecture connue permettant à une pluralité d'équipements 110 d'émettre et/ou de recevoir des données via un réseau AFDX (*Avionics Full Duplex Switched Ethernet*). Ces équipements peuvent être des capteurs transmettant des données de mesure à des calculateurs embarqués 150 ou bien des actionneurs recevant des données de consigne de tels calculateurs.

Les équipements 110 sont connectés à des dispositifs concentrateurs 120 au moyen d'un réseau de connexion 140 pouvant être un bus dit « de terrain » (*field bus*), par exemple un bus CAN, bien connu dans le domaine automobile ou bien encore un réseau de type Arinc 429. Les dispositifs concentrateurs sont eux-mêmes reliés au réseau AFDX pour transmettre et/ou recevoir les données en provenance ou à destination des différents équipements. Ils jouent le rôle de passerelles de conversion entre le réseau de connexion, 140, et le réseau AFDX, 130.

On rappelle que le réseau AFDX, développé pour les besoins de l'aéronautique est basé sur un réseau Ethernet commuté. Dans un réseau Ethernet commuté, chaque terminal, source ou destinataire, est relié individuellement à un commutateur de trames et les commutateurs sont reliés entre eux par des liaisons physiques. Le réseau AFDX fait appel à la notion de lien virtuel défini comme un chemin orienté de niveau 2 à travers le réseau, issu d'un terminal source et desservant un ou une pluralité de destinataires. Un terminal destinataire d'un lien virtuel est dit abonné à ce lien.

Le réseau AFDX a fait l'objet d'une standardisation dans la norme Arinc 664, partie 7. On trouvera notamment une description du réseau AFDX dans le document intitulé « AFDX protocol tutorial » disponible sous l'URL http://sierrasales.com/pdfs/AFDXTutorial.pdf ainsi qu'une présentation des liens virtuels dans FR-A-2832011 déposée au nom de la présente demanderesse. On rappellera simplement ici que le réseau AFDX est full-duplex, déterministe et redondant.

Par full-duplex, on entend que chaque terminal peut simultanément émettre et recevoir des trames sur des liens virtuels. Le réseau AFDX est déterministe, au sens où les liens virtuels ont des caractéristiques garanties en termes de borne de latence, de ségrégation physique de flux, de bande passante et de débit. Chaque lien virtuel dispose pour ce faire d'un chemin réservé de bout en bout à travers le réseau. Enfin le réseau AFDX est redondant car le réseau Ethernet sous-jacent est dupliqué pour des raisons de disponibilité. Les données sont transmises sous forme de paquets IP encapsulés dans des trames Ethernet. A la différence de la commutation Ethernet classique (utilisant l'adresse Ethernet du destinataire), la commutation de trames sur un réseau AFDX utilise un identificateur de lien virtuel inclus dans l'entête de trame. Lorsqu'un commutateur reçoit sur l'un de ses ports d'entrée une trame, il lit l'identificateur de lien virtuel et détermine à partir de sa table de commutation le ou les ports de sortie sur lesquels elle doit être transmise. Les commutateurs vérifient au vol l'intégrité des trames transmises sans toutefois demander une retransmission si une trame est erronée : les trames détectées comme erronées sont éliminées. Les trames transitant sur un lien virtuel sont numérotées en séquence. A la réception, le terminal destinataire vérifie l'intégrité de la séquence des trames.

L'architecture de connexion illustrée en Fig. 1 présente l'inconvénient d'être hétérogène. Elle nécessite par conséquent des passerelles de conversion entre le réseau AFDX et les réseaux/ bus de terrain utilisés pour connecter les différents équipements.

Une première solution consisterait à connecter directement les différents équipements à un commutateur de trames du réseau AFDX. Toutefois, étant donné le grand nombre d'équipements embarqués dans un aéronef, cela nécessiterait d'utiliser un grand nombre de tels commutateurs. En outre, les commutateurs étant traditionnellement situés dans les baies avioniques, autrement dit généralement loin des capteurs/actionneurs, cette solution impliquerait d'utiliser de nombreuses et longues connexions filaires, ce qui serait préjudiciable au bilan de masse de l'appareil.

Un objet de la présente invention est par conséquent de proposer une architecture permettant de connecter un grand nombre d'équipements embarqués au réseau AFDX sans présenter les inconvénients précités.

Un autre objet de la présente invention est de proposer un dispositif de commutation de trames permettant de relier entre eux plusieurs équipements embarqués et de leur permettre, le cas échéant, d'avoir accès au réseau AFDX.

## EXPOSÉ DE L'INVENTION

La présente invention est définie par un dispositif de commutation de trames pour réseau AFDX, comprenant un premier port, destiné à être connecté à un commutateur dudit réseau ou à un terminal, et une pluralité de seconds ports destinés à être respectivement connectés à des équipements embarqués. Ledit dispositif opère de la manière suivante :

- chaque trame incidente sur le premier port est répliquée sur chacun desdits seconds ports ;
- lesdits seconds ports sont scrutés périodiquement tour à tour, chaque trame présente sur un second port scruté étant transférée sur ledit premier port.

De préférence, chaque trame incidente sur le premier port est répliquée sur chacun des seconds ports au fur et à mesure de sa réception sur le premier port.

Chaque second port est avantageusement associé à un buffer d'entrée dans lequel sont stockées les trames incidentes sur ce port, chaque port étant scruté en vérifiant si le buffer qui lui est associé contient une trame, ladite trame étant, dans l'affirmative, vidée dudit buffer pour être transmise sur ledit premier port. Chaque second port est typiquement scruté avec une période de scrutation $\tau \leq 500\mu s$.

Le temps total pour vider un buffer d'entrée et le transmettre sur le premier port est avantageusement choisi inférieur à $\tau/N$ où $\tau$ et $N$ sont respectivement la période de scrutation et le nombre de seconds ports.

De préférence, lesdits buffers d'entrée ont une taille de $(\tau/N)D$ bits où $D$ est le débit binaire sur le premier port.

L'invention est également définie par un système embarqué comprenant une pluralité d'équipements connectés respectivement aux seconds ports d'un dispositif de commutation de trames tel que défini ci-dessus, chaque équipement étant configuré pour n'émettre qu'au plus une trame toutes les $500\mu s$. En outre, chaque équipement est typiquement configuré pour émettre ladite trame en un temps inférieur à $500$ $\mu s$.

L'invention concerne également un dispositif de commutation de trames pour connecter une pluralité d'équipements embarqués entre eux et/ou à un calculateur, comprenant une pluralité ($N$) de ports d'entrée/sortie destinés à être connectés aux dits équipements ou au dit calculateur via des liaisons Ethernet, ledit dispositif comprenant des moyens de réplication de trames scrutant tour à tour lesdits ports d'entrée, chaque port d'entrée étant scruté avec une période de scrutation déterminée, et recopiant toute trame incidente en un port d'entrée sur tous les ports de sortie.

L'invention concerne enfin un dispositif de commutation de trames pour connecter une pluralité d'équipements embarqués entre eux et/ou à un calculateur, ledit dispositif comprenant une pluralité de dispositifs élémentaires de commutation de trames ($P$), chaque dispositif élémentaire comportant une pluralité ($N$) de ports d'entrée/sortie destinés à être connectés aux dits équipements, au dit calculateur ou à un autre dispositif de commutation élémentaire via des liaisons Ethernet, chaque dispositif de commutation élémentaire comprenant des moyens de réplication de trames scrutant lesdits ports d'entrée, chaque port d'entrée directement connecté à un équipement ou au calculateur, dit premier port d'entrée, étant scruté avec une première période déterminée, chaque port d'entrée relié à un autre dispositif de commutation élémentaire, dit second port d'entrée étant scruté avec une seconde période inférieure à la première, les moyens de réplication recopiant toute trame incidente en un premier port d'entrée sur tous les ports de sortie et recopiant toute trame incidente en un second port d'entrée sur tous les ports de sortie à l'exception de celui associé à ce dernier.

## BRÈVE DESCRIPTION DES DESSINS

La Fig. 1 représente une architecture de connexion d'une pluralité d'équipements au réseau AFDX, connue de l'état de la technique ;

La Fig. 2A représente une architecture de connexion d'une pluralité d'équipements au réseau AFDX, selon une première variante de réalisation de l'invention ;

La Fig. 2B représente une architecture de connexion d'une pluralité d'équipements au réseau AFDX, selon une seconde variante de réalisation de l'invention ;

La Fig. 3 représente schématiquement le fonctionnement d'un dispositif de commutation de trames, selon un premier mode de réalisation de l'invention, dans le cas d'une liaison montante ;

La Fig. 4 représente schématiquement le fonctionnement d'un dispositif de commutation de trames selon un premier mode de réalisation de l'invention, dans le cas d'une liaison descendante ;

La Fig. 5 illustre les contraintes temporelles relatives à un lien virtuel issu d'un équipement embarqué et transitant par un dispositif de commutation de trames selon l'invention ;

La Fig. 6A représente schématiquement une architecture de connexion d'une pluralité d'équipements embarqués selon une troisième variante de l'invention ;

La Fig. 6B représente schématiquement une architecture de connexion d'une pluralité d'équipements embarqués selon une quatrième variante de l'invention ;

La Fig. 7A représente schématiquement un dispositif de commutation de trames selon un second mode de réalisation de l'invention ;

La Fig. 7B représente schématiquement un dispositif de commutation de trames selon un second mode de réalisation de l'invention.

## EXPOSÉ DÉTAILLÉ DE MODES DE RÉALISATION PARTICULIERS

Une première idée à la base de l'invention consiste à relier les différents équipements embarqués au réseau AFDX, sans passerelle de conversion, grâce à un dispositif de commutation de trames plus simple qu'un commutateur de trames classique. Ce dispositif de commutation peut être situé à proximité des capteurs/actuateurs auxquels il est relié.

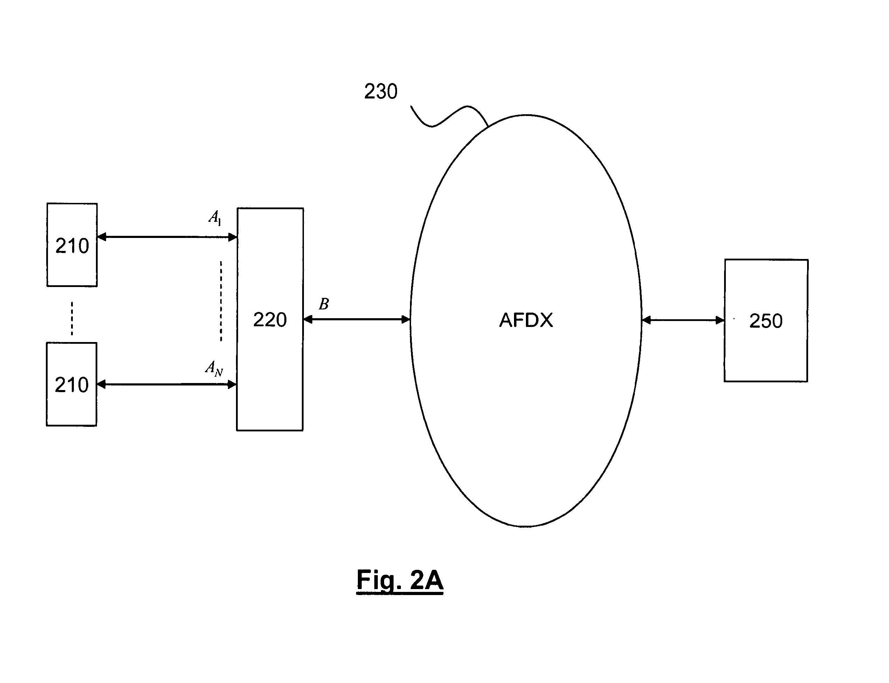

La Fig. 2A représente une architecture de connexion selon un mode de réalisation de l'invention. Les équipements embarqués 210, par exemple des capteurs ou des actionneurs, sont directement connectés à un dispositif de commutation de trames 220. Ce dispositif peut être relié soit à un commutateur classique, SW, du réseau soit, directement, au calculateur (machine hôte) 250. Plus précisément, le dispositif 220 comprend, d'une part, $N$ ports d'entrée/sortie, $A_1...A_N$, respectivement connectés aux $N$ équipements embarqués 210, et d'autre part, un port d'entrée/sortie, $B$, connecté à un port du commutateur SW ou, directement au calculateur 250. Il est important de noter que le dispositif de commutation 220 fait partie du réseau AFDX au même titre que le commutateur de trames classique SW. Les équipements embarqués 210 et le calculateur 250 sont des terminaux (*End Systems*) au sens de la norme Arinc 664. Dans tous les cas, les données sont transmises entre les équipements 210 et le calculateur 250 grâce à un ou de plusieurs lien (s) virtuel(s), comme on le verra en détail plus loin.

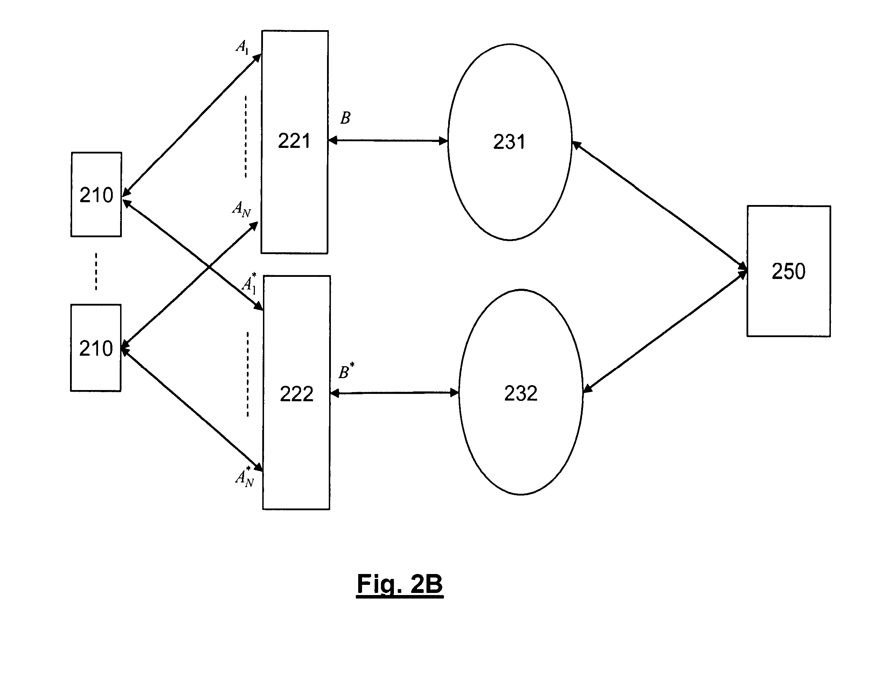

Selon une variante de réalisation, représentée en Fig. 2B, le réseau AFDX est redondé, c'est-à-dire qu'il est constitué d'un premier réseau, comprenant un premier dispositif de commutation 221, et d'un second réseau, comprenant un second dispositif de commutation 222. Les premier et second dispositifs de commutation sont identiques à celui représenté en 220 en Fig. 2A. Au sein de chaque réseau le dispositif de commutation 221, 222 est relié soit à un commutateur de trames de ce réseau, soit directement au calculateur 250. Lorsqu'une trame de données doit être transmise par le calculateur 250, deux copies identiques de cette trame sont alors envoyées en parallèle sur les deux réseaux, et atteignent l'équipement destinataire via les premier et second dispositifs de connexion. L'équipement destinataire ne garde que la première trame reçue. Réciproquement, lorsqu'une trame de données doit être transmise par un équipement embarqué 210 au calculateur 250, deux copies de cette trame sont transmises via les premier et second dispositifs de commutation, respectivement sur les deux réseaux. De même que précédemment, seule la première trame reçue est conservée.

Les équipements embarqués 210 sont configurés de sorte à ne pas transmettre plus d'une trame par période de temps $\Delta\tau_{jitter}^{max}$ où $\Delta\tau_{jitter}^{max}$ est la gigue maximale autorisée pour un terminal (*End* System) dans le réseau AFDX. Dans l'état actuel de la norme,

$$\Delta\tau_{jitter}^{max} = 500\mu s \;.$$

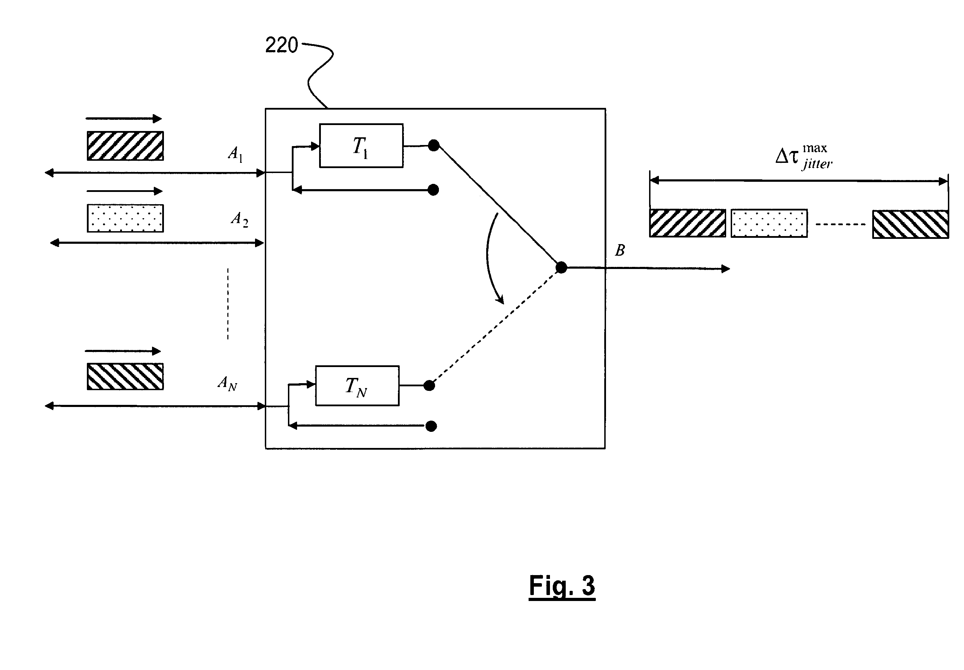

La Fig. 3 représente le fonctionnement d'un dispositif de commutation de trames selon l'invention dans le cas d'une liaison montante, c'est-à-dire lorsque les équipements 210 transmettent des trames au calculateur embarqué 250.

Chacun des ports d'entrée/sortie $A_1..., A_N$ est associé à un buffer d'entrée et, facultativement, à un buffer de sortie (non représenté). Le port d'entrée/sortie $B$ est associé facultativement à un buffer d'entrée et/ou un buffer de sortie (non représentés). Les buffers d'entrée, et le cas échéant, les buffers de sorties sont des tampons mémoire, pouvant être réalisés par exemple sous forme de registres ou de zones mémoire d'une RAM.

Chaque port d'entrée/sortie $A_n$ est relié à un équipement 210, par exemple à l'aide d'une double paire torsadée, une paire pour la liaison montante et une paire pour la liaison descendante. De même le port d'entrée/sortie $B$ est relié à un commutateur du réseau, ou bien directement au calculateur embarqué, par exemple au moyen d'une double paire torsadée. Des liaisons optiques peuvent être utilisées en lieu et place de paires torsadées.

Les trames reçues sur les $N$ ports $A_1,..,A_N$ sont respectivement stockées dans les $N$ buffers d'entrée $T_1, ...,T_N$, de taille prédéterminée $L$, précisée plus loin. Si une trame est reçue sur le port $A_n$ alors que le buffer $T_n$ associé contient déjà une trame, cette dernière est simplement écrasée (l'écriture commençant à la même adresse). De même si une trame incidente est de longueur supérieure à $L$, cette trame se trouve de fait tronquée à la longueur $L$, lors de l'écriture dans le buffer.

Les buffers $T_1,...,T_N$ sont vidés chacun à tour de rôle sur le port $B$, avec une périodicité

$$\tau \leq \Delta\tau_{jitter}^{max} \;.$$

. Ainsi, pour un équipement donné transmettant des trames sur un lien virtuel avec une contrainte d'espacement temporel minimum BAG (*Bandwidth Allocation Gap*), les trames en sortie du dispositif de commutation présenteront une gigue maximale $\Delta\tau_{jitter}^{max}$ par rapport aux instants de transmission possibles sur le lien virtuel $t_0$+BAG, $t_0$+2BAG, $t_0$+3BAG ,... où $t_0$ est une référence de temps arbitraire. En effet, une trame stockée dans un buffer d'entrée du dispositif de commutation attendra au plus $\Delta\tau_{jitter}^{max}$

avant d'être transmise sur le réseau.

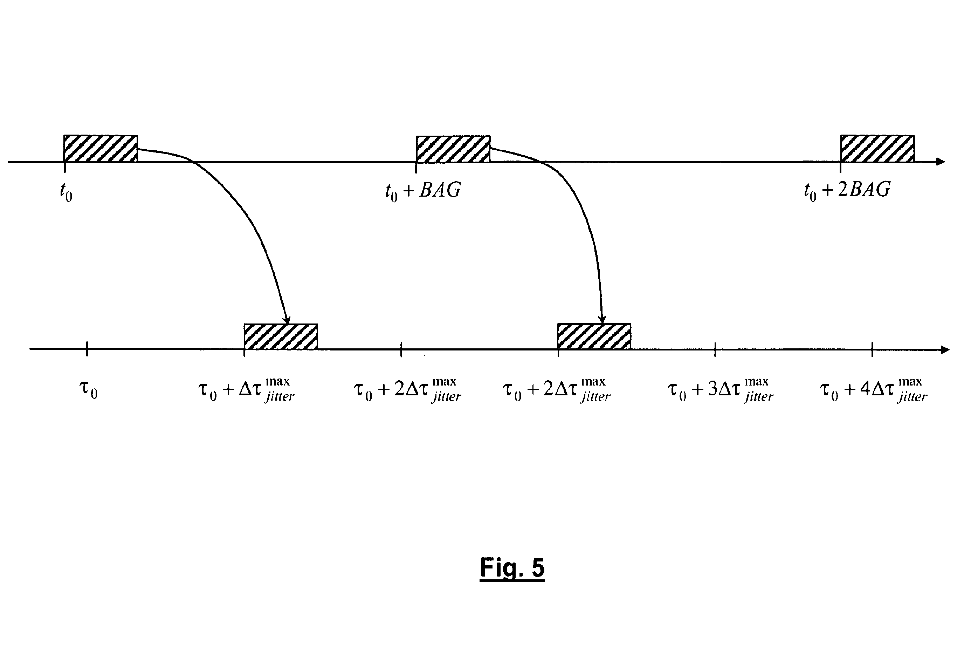

Cette situation est illustrée en Fig. 5, ou l'on a représenté sur un premier axe temporel les instants possibles d'émission $t_i=t_0+i.BAG$ pour le lien virtuel en question, et sur un second axe temporel les instants de vidage du buffer d'entrée sur le port de sortie,

$$\tau_k = \tau_0 + k\Delta\tau_{jitter}^{max} .$$

. Si une trame *F* est présente dans le buffer $T_n$ juste avant un instant $\tau_k$, cette trame est transférée à l'instant $\tau_k$ sur le port de sortie *B*. En revanche, si une trame *F* est présente dans le buffer $T_n$ juste après cet instant, elle ne sera transférée qu'à l'instant $\tau_{k+1}$. Le retard $\theta_i$ introduit par le dispositif de commutation est donc toujours inférieur à la gigue maximale tolérée. $\Delta\tau_{jitter}^{max}$ .

Pour chaque buffer d'entrée, le temps total de vidage d'une trame et de transmission de cette trame sur le port *B* doit être choisi inférieur $\tau/N$. Ainsi, le vidage d'un buffer sera terminé avant de passer au buffer suivant. La taille *L* est avantageusement choisie égale à $(\tau/N)D$, où *D* est le débit binaire en sortie du port *B.*

Le dispositif de commutation n'effectue aucune lecture d'entête de trame et *a fortiori* pas de contrôle de CRC. La trame est simplement transférée par recopie sur le port *B.* Autrement dit, une trame erronée incidente sera transmise en l'état, sans traitement ni rejet par le dispositif de commutation. En particulier, une trame tronquée, possédant par conséquent un CRC erroné, sera transmise telle quelle. Le destinataire final rejettera la trame erronée/ tronquée lors de la vérification du CRC.

Si un équipement ne respecte pas les contraintes d'émission, par exemple s'il émet des trames avec une périodicité plus faible que $\Delta\tau_{jitter}^{max}$ , une trame issue de l'équipement peut écraser une trame précédente dans le buffer avant qu'il ne soit vidé. Ceci est toutefois sans incidence sur le sort des trames de données transmises par les autres équipements.

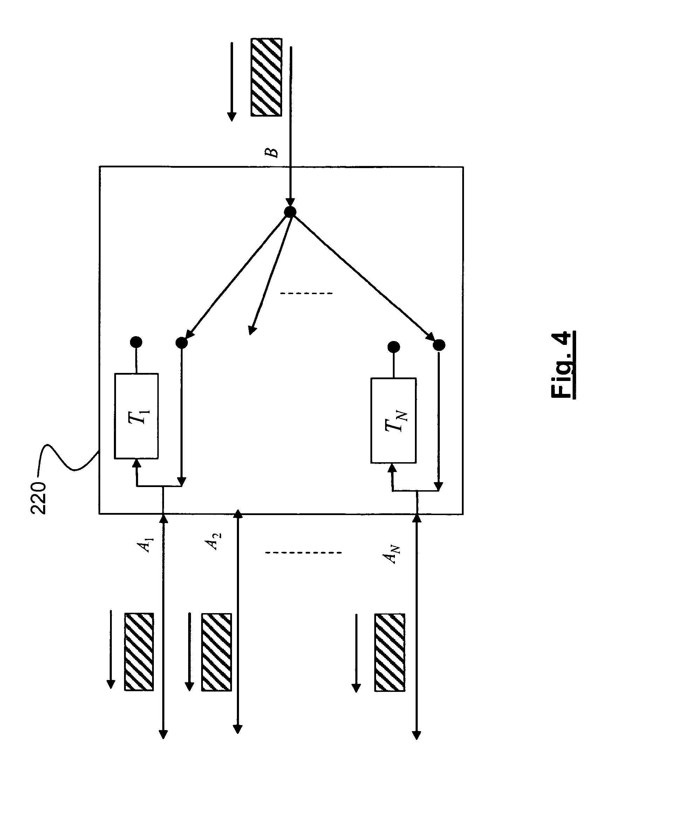

La Fig. 4 représente le fonctionnement du dispositif de commutation dans le cas d'une liaison descendante, c'est-à-dire dans lorsque les équipements 210 reçoivent des trames au calculateur embarqué 250.

A la différence avec la liaison montante, le dispositif de commutation joue ici un simple rôle de hub. Autrement dit, toute trame incidente sur le port *B* est automatiquement répliquée sur les ports $A_1,...,A_N$ du dispositif de commutation. Cette réplication est avantageusement effectuée au fur et à mesure de la réception de la trame incidente, sans stockage dans un buffer ni contrôle de son CRC. La trame incidente ne subit donc pas de temps de contention au niveau du dispositif de commutation, seulement un retard inhérent à l'opération de réplication.

Lorsqu'un lien virtuel a pour destinataire l'un des équipements 210, le routage du lien virtuel à travers le réseau ne requiert pas de connaître le port de sortie du dispositif 220 auquel cet équipement est relié. En effet, une trame de données cheminant sur ce lien virtuel sera diffusée par le dispositif de commutation à tous les équipements qui lui sont connectés. Toutefois, chaque équipement qui n'est pas abonné à ce lien virtuel rejettera la trame en constatant que l'identificateur du lien virtuel spécifié dans cette trame lui est inconnu. En définitive, seul(s) le ou les destinataire(s) du lien virtuel en question conservera(ront) la trame en question.

L'architecture du dispositif de commutation telle que décrite ci-dessus est particulièrement simple et robuste. En particulier, la fonction de contrôle d'erreur sur les liaisons montante et descendante, ainsi que la fonction de commutation sur la liaison descendante sont déportées sur les terminaux. En dépit de cette simplicité, le dispositif de commutation selon l'invention permet aux différents équipements d'être source ou destinataire d'un lien virtuel et de disposer des services attachés au réseau AFDX, notamment de bénéficier des outils de test, de diagnostic de pannes, de téléchargement de logiciels utilisés sur ce réseau.

Nous indiquerons ci-après un exemple numérique de réalisation du dispositif de commutation 220.

Nous supposerons que le dispositif de commutation est relié à 5 équipements embarqués au moyen de liaisons à 10 Mbits/s. Autrement dit, chaque équipement ne peut transmettre qu'une trame de 125 octets toutes les $\Delta\tau_{jitter}^{max} = 500\mu s$ . . Ces 125 octets disponibles doivent être affectés comme suit : 12 octets sont à dédier au champ IFG pour la séparation inter-trame (*Interframe Gap*), 7 octets au préambule, 1 octet de délimitation de début de trame ou SFD (*Start Frame Delimiter*), 14 octets à l'entête Ethernet, 20 octets d'entête IP, 8 octets à l'entête UDP, 1 octet au numéro de séquence, 4 octets au contrôle d'erreur (FCS). La trame ne peut donc contenir en définitive que 58 octets de charge utile.

Ainsi, si un équipement est source d'un lien virtuel associé à un espacement temporel BAG de 1ms (le plus faible espacement temporel actuellement envisagé par la norme AFDX), l'équipement peut transmettre 58 octets toutes les ms, soit une bande passante garantie de 464 kbits/s sur ce lien. L'espacement minimum inter-trame étant de $500\mu s$, l'équipement peut supporter deux liens virtuels de 464 kbits/s, soit une bande passante totale garantie de 928 kbits/s. Cette dernière est réservée à l'équipement en question et n'est pas partagée avec les autres équipements reliés au dispositif de commutation. Simultanément, l'équipement peut recevoir des trames sur la liaison descendante.

On peut également montrer dans ce cas que le temps de latence maximal entre l'équipement et le calculateur embarqué est de l'ordre de 1,5ms sur la liaison descendante et de 2ms sur la liaison montante.

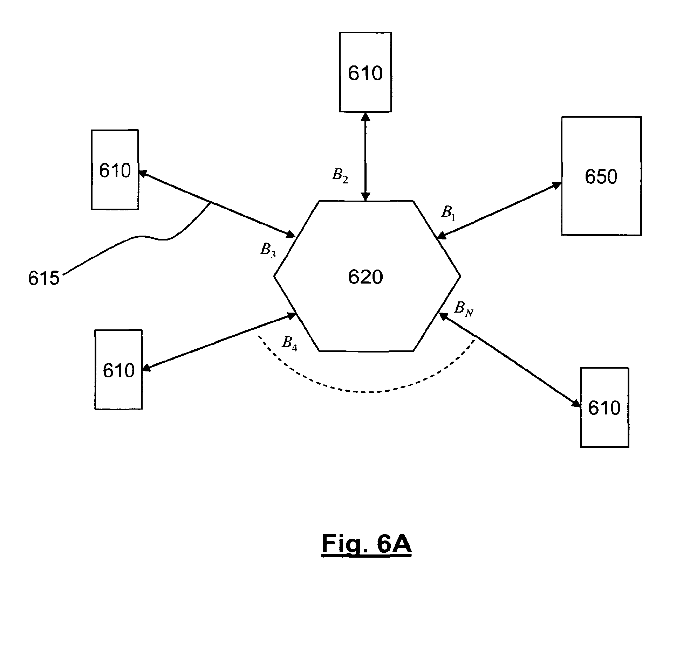

La Fig. 6A représente une architecture de connexion d'une pluralité d'équipements embarqués selon une troisième variante de réalisation de l'invention. Cette variante permet de relier plusieurs équipements embarqués, 610, entre eux et, le cas échéant, de les relier à une machine hôte (calculateur), soit directement soit à travers un réseau AFDX.

A la différence des variantes précédentes, les équipements en question sont reliés entre eux à travers un dispositif de commutation de trames 620. On suppose à nouveau que chaque équipement 610 est capable d'émettre des trames avec une contrainte d'espacement temporel minimum (BAG). Chaque équipement 610 est relié à un port d'entrée/sortie $B_n$, $n = 1,..,N$ du dispositif 620 grâce à une liaison Ethernet, 615. Un des ports d'entrée/sortie du dispositif de commutation peut être relié au calculateur ou à un commutateur de trames d'un réseau AFDX. Dans ce dernier cas, les différents équipements ont accès au réseau à travers le dispositif de commutation 620. Il convient de noter que les liaisons Ethernet 615 ne font pas ici partie du réseau AFDX et que par conséquent les trames Ethernet émises sur ces liaisons n'obéissent pas nécessairement au format de la norme Arinc 664. En particulier les trames émises sur ces liaisons n'ont pas nécessairement à respecter la contrainte de gigue maximale $\Delta\tau_{jitter}^{max}$ .

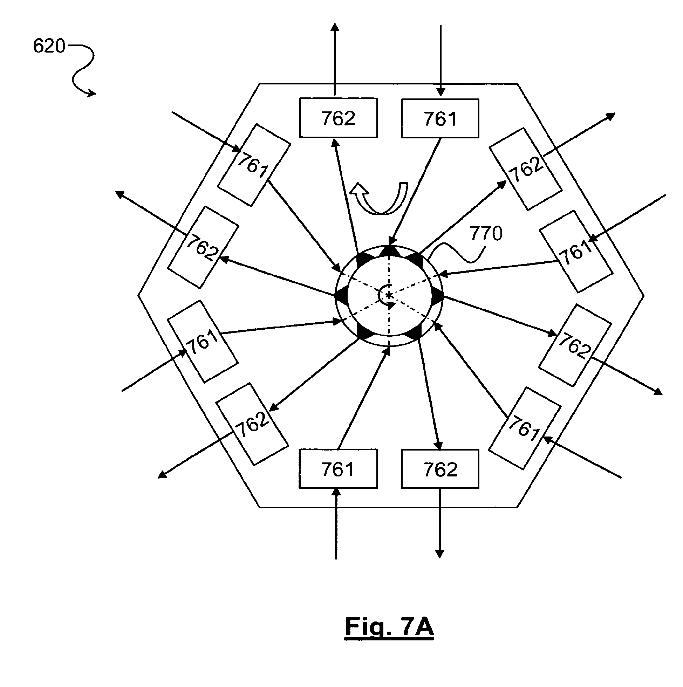

La Fig. 7A illustre schématiquement la structure du dispositif de commutation 620. Ce dispositif comprend $N$ ports d'entrée 761 et $N$ ports de sortie 762. Les ports d'entrée 761 comprennent chacun un buffer d'entrée de taille suffisante pour stocker une trame incidente. Les ports de sortie 762 peuvent comprendre un buffer de sortie ou non. Dans ce dernier cas, la trame est directement émise sur la liaison connectée au port de sortie.

Le dispositif de commutation comprend en outre des moyens de réplication 670, représentés symboliquement sous la forme de commutateur rotatif à $N$ positions. Ces moyens de réplication 670 recopient toute trame incidente en l'un des ports d'entrée $B_k^{in}$ dans tous les ports de sortie $B_\ell^{out}$, $\ell$-1,..,$N$. Plus précisément, les moyens 670 scrutent tour à tour les différents ports d'entrée et transmettent toute trame présente sur un port d'entrée sur chacun des ports de sortie, y compris sur celui associé au port d'entrée ayant reçu la trame incidente. Un port d'entrée est scruté, c'est-à-dire son buffer d'entrée est lu, avec une périodicité $\tau$, autrement dit le dispositif 620 effectue un cycle de commutation de durée $\tau$. Il est important de noter que le fonctionnement du dispositif de commutation de trames est celui d'un hub aux différences remarquables

- qu'il opère de manière synchrone, par scrutation périodique de ses ports d'entrée.
- qu'il n'y a aucune collision de trames.

La période de scrutation $\tau$, doit en outre respecter les contraintes suivantes :

$$T = \sum_{i=1}^{N} T_i < \tau < BAG$$

où *BAG* est, comme on l'a dit, l'écart temporel minimum temporel entre deux trames émises par un équipement, et $T_i$ le temps nécessaire à l'émission de la trame la plus longue émise par un équipement connecté au port $B_i$ du dispositif de commutation.

Par exemple, si le nombre de ports du dispositif de commutation est de $N$ =8, le débit binaire de $D$ = 100 Mbits/s, la longueur de la charge utile de L=100 octets, la longueur de l'entête MAC/IP/UDP+CRC de I=46 octets, l'espacement minimum entre deux trames Ethernet (IFG+preambule) de E=20 , T=N (L+I+E).8/D= 106, 24$\mu$s et si *BAG* = 500 $\mu$s, on pourra choisir une période de scrutation de $\tau$=490$\mu$s.

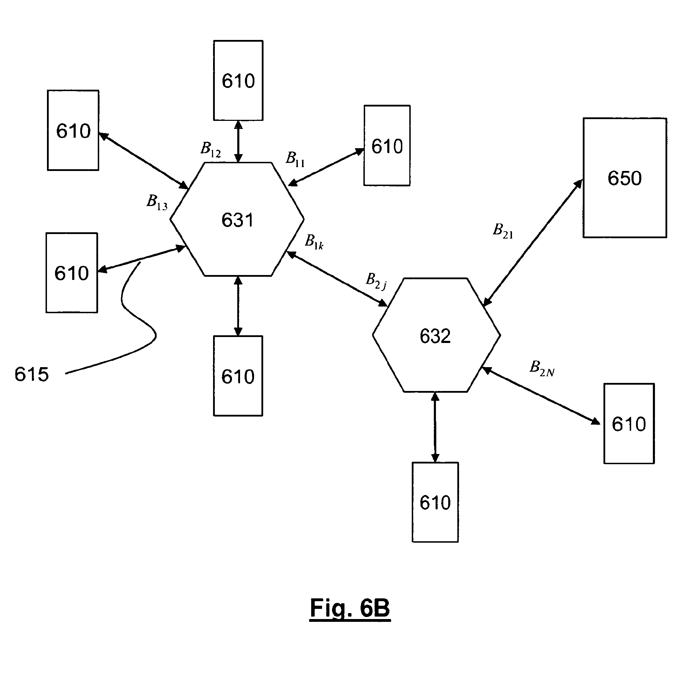

La Fig. 6B représente une architecture de connexion d'une pluralité d'équipements embarqués selon une quatrième variante de réalisation de l'invention.

Cette variante se distingue de la précédente en ce qu'il comprend une pluralité $P$ de dispositifs de commutation élémentaires, ici 631, 632, qui sont reliés en cascade, chaque dispositif élémentaire comportant $N$ ports d'entrée/sortie et le dispositif d'ensemble permettant de relier au plus $P(N-1)$ équipements embarqués entre eux. Le dispositif permet également de relier des équipements embarqués à un calculateur 650 soit par connexion directe à un port d'entrée/sortie ($B_{21}$), comme représenté, soit à travers un réseau AFDX.

Avantageusement, les équipements embarqués et/ou les commutateurs élémentaires sont alimentés par le réseau Ethernet, la paire torsadée servant alors à la fois à l'alimentation et à la transmission des données. Cette technique est connue sous le nom de PoE (*Power over Ethernet*) et décrite dans la norme IEEE 802.af. On peut ainsi ne pas prévoir des bus d'alimentation séparés et améliorer le bilan de masse de l'appareil. On notera que cette technique s'applique *a fortiori* à l'architecture de la Fig. 6A.

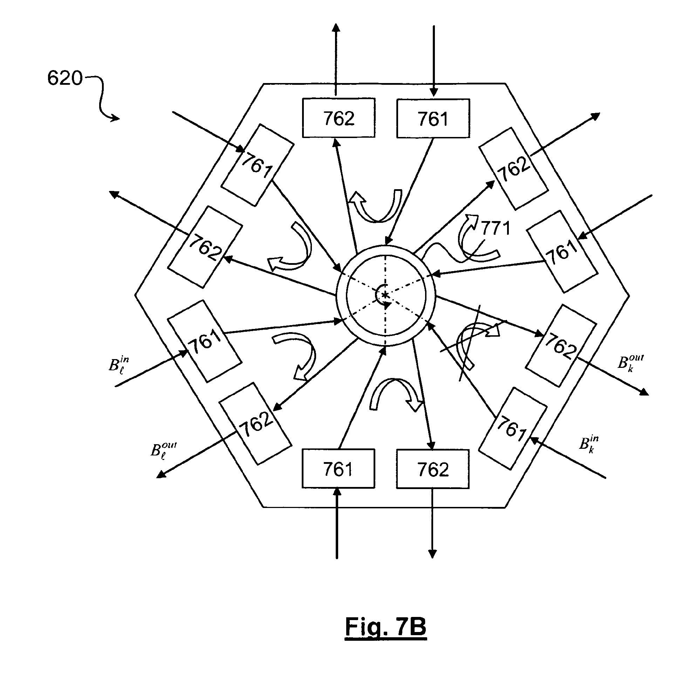

La Fig. 7B représente schématiquement la structure d'un dispositif de commutation élémentaire utilisé dans l'architecture de la Fig. 6B. Un tel dispositif est similaire à celui illustré en Fig. 7A, les éléments identiques portant les mêmes signes de référence. Il s'en distingue toutefois par la fonction des moyens de réplication, 771. En effet, si l'on considère une architecture à deux dispositifs élémentaires, 631 et 632, telle qu'illustrée en Fig. 6B, et si l'on note respectivement $B_{1k}^{in}$ et

$B_{2k}^{out}$ les ports d'entrée et de sortie du premier dispositif le reliant au second, le port d'entrée $B_{1k}^{in}$ sera scruté $N$-1 fois plus fréquemment que les autres. Plus précisément, si la période de scrutation de $B_{1\ell}^{in}$, $\ell$ ≠ $k$ est de $\tau$ où $\tau$ est la période de scrutation, déterminée pour le dispositif élémentaire non cascadé, la période de scrutation de $B_{1k}^{in}$ est inférieur ou égale à $\tau/N$-1, le flux de trames incidentes sur le port $B_{1k}^{in}$ étant $N$-1 fois plus élevé que sur les autres ports. De manière plus générale, si $P$ est le nombre de dispositifs élémentaires mis en série, la période de scrutation du ou des port(s) d'entrée assurant l'interconnexion avec un autre dispositif élémentaire sera inférieure ou égale à $\tau/(N-1)^{P-1}$.

Les moyens de réplication 771 se distinguent également des moyens 770 précédents en ce qu'ils n'effectuent pas une recopie du port d'entrée $B_{1k}^{in}$ sur le port de sortie $B_{2k}^{out}$. De même, pour le dispositif de commutation 632, il n'y a pas recopie de $B_{2j}^{in}$ sur $B_{2j}^{out}$ et de manière plus générale, la recopie locale est interdite pour tout port assurant une interconnexion entre deux dispositifs de commutation élémentaires. L'interdiction de recopie locale pour les ports en question permet d'éviter le rebouclage infini entre dispositifs élémentaires de commutation.

Nous donnerons ci-après un exemple numérique dans le cas illustré en Fig. 6B de deux dispositifs élémentaires cascadés, c'est-à-dire $P$ =2. On suppose comme précédemment que $N$=8, $D$ = 100 Mbits/s, L = 100 octets, et I=46 octets l'espacement minimum entre deux trames Ethernet (IFG+preamble) de E=20. Le temps minimum $T$ pour émettre toutes les trames incidentes est de 14 (100+46+20).8/100 = 185,92). Si BAG = 500 μs on peut prendre un temps de scrutation $\tau$ de 490 μs pour les ports d'entrée reliés directement aux équipements et un temps de scrutation $\tau$' de 70 μs pour

le port d'interconnexion avec l'autre dispositif élémentaire de commutation.

**Revendications**

1. Dispositif de commutation de trames pour réseau AFDX, comprenant un premier port ($B$), destiné à être connecté à un commutateur ($SW$) dudit réseau ou à un terminal (250), et une pluralité de seconds ports ($A_1,...,A_N$) destinés à être respectivement connectés à des équipements embarqués (210), **caractérisé en ce que** :

   - chaque trame incidente sur le premier port est répliquée sur chacun desdits seconds ports au fur et à mesure de sa réception sur le premier port;
   - lesdits seconds ports sont scrutés périodiquement tour à tour, chaque trame présente sur un second port scruté étant transférée sur ledit premier port ;

   chaque second port étant associé à un buffer d'entrée ($T_1,..,T_N$) dans lequel sont stockées les trames incidentes sur ce port, chaque port étant scruté en vérifiant si le buffer qui lui est associé contient une trame, ladite trame étant, dans l'affirmative, vidée dudit buffer pour être transmise sur ledit premier port.

2. Dispositif de commutation de trames selon la revendication 1, **caractérisé en ce que** chaque second port est scruté avec une période de scrutation $\tau \leq 500\mu s$.

3. Dispositif de commutation de trames selon la revendication 1, **caractérisé en ce que** le temps total pour vider un buffer d'entrée et le transmettre sur le premier port est inférieur à $\tau/N$ où $\tau$ et $N$ sont respectivement la période de scrutation et le nombre de seconds ports.

4. Dispositif de commutation de trames selon la revendication 3, **caractérisé en ce que** lesdits buffers d'entrée ont une taille de $(\tau/N)D$ bits où $D$ est le débit binaire sur le premier port.

5. Système embarqué comprenant un dispositif de commutation de trames selon la revendication 2 ainsi qu'une pluralité d'équipements connectés (210) respectivement aux seconds ports de ce dispositif, chaque équipement étant configuré pour n'émettre qu'au plus une trame toutes les $500\mu s$.

6. Système embarqué selon la revendication 5, **caractérisé en ce que** chaque équipement est configuré pour émettre ladite trame en un temps inférieur à 500 μs.

**Claims**

1. A frame switching device for an AFDX network, comprising a first port (*B*), intended to be connected to a switch (*SW*) of said network or to a terminal (250), and a plurality of second ports ($A_1,...,A_N$) intended to be respectively connected to on-board pieces of equipment (210), **characterized in that**:

   - each incident frame on the first port is replicated on each of said second ports as it is received on the first port;
   - said second ports are periodically polled in turn, each frame present on a second polled port being transferred onto said first port, each second port being associated with an input buffer ($T_1,..,T_N$) in which are stored the incident frames on this port, each port being polled by checking whether the buffer with which it is associated contains a frame, if yes, said frame being emptied from said buffer in order to be transmitted onto said first port.

2. The frame switching device according to claim 1, **characterized in that** each second port is polled with a polling period $\tau \leq 500\mu s$.

3. The frame switching device according to claim 1, **characterized in that** the total time for emptying an input buffer and transmitting it onto the first port is less than $\tau/N$ wherein $\tau$ and $N$ are the polling period and the number of second ports respectively.

4. The frame switching device according to claim 3, **characterized in that** said input buffers have a size of $(\tau/N)D$ bits wherein *D* is the binary throughput on the first port.

5. An on-board system comprising a frame switching device according to claim 2 and a plurality of pieces of equipment (210) respectively connected to the second ports of this device, each piece of equipment being configured in order to transmit at most one frame every $500\mu s$.

6. The on-board system according to claim 5, **characterized in that** each piece of equipment is configured in order to transmit said frame within a time of less than $500~\mu s$.

**Patentansprüche**

1. Vorrichtung zur Vermittlung von Datenpaketen für ein AFDX-Netz, umfassend einen ersten Port (B), der dazu ausgelegt ist, an einem Schalter (SW) des Netzes oder an einem Terminal (250) angeschlossen zu sein, sowie eine Mehrzahl von zweiten Ports ($A_1,...,A_N$), die dazu ausgelegt sind, jeweils an eingebettete Geräte (210) angeschlossen zu sein, **dadurch gekennzeichnet, dass**:

   - jedes Datenpaket, das an dem ersten Port eintrifft, im Verlauf seines Empfangs am ersten Port nach und nach an jedem der zweiten Ports repliziert wird;
   - die zweiten Ports periodisch nach und nach untersucht werden, wobei jedes Datenpaket, das an einem untersuchten zweiten Port vorhanden ist, an den ersten Port übertragen wird;

   jeder zweite Port einem Eingangspuffer ($T_1,...,T_N$) zugeordnet ist, in welchem die Datenpakete gespeichert werden, die an diesem Port eintreffen, wobei jeder Port untersucht wird, indem überprüft wird, ob der ihm zugeordnete Puffer ein Datenpaket enthält, wobei das Datenpaket bejahendenfalls aus dem Puffer entfernt wird, um zum ersten Port übertragen zu werden.

2. Vorrichtung zur Vermittlung von Datenpaketen nach Anspruch 1, **dadurch gekennzeichnet, dass** jeder zweite Port mit einer Untersuchungsperiode $\tau \leq 500\mu s$ untersucht wird.

3. Vorrichtung zur Vermittlung von Datenpaketen nach Anspruch 1, **dadurch gekennzeichnet, dass** die gesamte Zeit für die Leerung eines Eingangspuffers und für seine Übertragung an den ersten Port kleiner ist als $\tau/N$, wobei $\tau$ und N die Untersuchungsperiode beziehungsweise die Zahl der zweiten Ports sind.

4. Vorrichtung zur Vermittlung von Datenpaketen nach Anspruch 3, **dadurch gekennzeichnet, dass** die Eingangspuffer eine Größe von $(\tau/N)D$ Bits haben, wobei D die Bitrate am ersten Port ist.

5. Eingebettetes System, umfassend eine Vorrichtung zur Vermittlung von Datenpaketen nach Anspruch 2 sowie eine Mehrzahl von Geräten (210), die jeweils an die zweiten Ports dieser Vorrichtung angeschlossen sind, wobei jedes Gerät dazu ausgelegt ist, nur höchstens ein Datenpaket alle $500\mu s$ auszusenden.

6. Eingebettetes System nach Anspruch 5, **dadurch gekennzeichnet, dass** jedes Gerät dazu ausgelegt ist, das Datenpaket in einer Zeit von weniger als $500~\mu s$ auszusenden.

**Fig. 1**

**Fig. 2A**

**Fig. 2B**

$A_1$

$A_2$

$A_N$

$T_1$

$T_N$

$B$

$220$

$\Delta\tau_{jitter}^{max}$

**Fig. 3**

EP 2 186 271 B1

Fig. 4

$t_0$  $t_0 + BAG$  $t_0 + 2BAG$

$\tau_0$  $\tau_0 + \Delta\tau_{jitter}^{max}$  $\tau_0 + 2\Delta\tau_{jitter}^{max}$  $\tau_0 + 2\Delta\tau_{jitter}^{max}$  $\tau_0 + 3\Delta\tau_{jitter}^{max}$  $\tau_0 + 4\Delta\tau_{jitter}^{max}$

**Fig. 5**

EP 2 186 271 B1

610

610

650

$B_2$

$B_1$

$B_3$

620

615

$B_N$

$B_4$

610

610

**Fig. 6A**

**Fig. 6B**

**Fig. 7A**

620

762 761

761

762

762

761

771

761

762

762 761

762

$B_\ell^{in}$

$B_\ell^{out}$

$B_k^{out}$

$B_k^{in}$

761 762

**Fig. 7B**

## RÉFÉRENCES CITÉES DANS LA DESCRIPTION

**Documents brevets cités dans la description**

- FR 2832011 A